# EUROPEAN PATENT APPLICATION

(11) **EP 4 286 490 A1**
(43) Date of publication of application: **06.12.2023**
(21) Application number: 22746042.5
(22) Date of filing: 28.01.2022
(51) Int. Cl.: C09J 175/04, C08G 18/10, C08G 18/66

(54) **POLYURETHANE STRUCTURAL ADHESIVE**

(30) Priority: 29.01.2021 JP 2021013470; 22.03.2021 JP 2021047160
(71) Applicant: Mitsui Chemicals, Inc., Tokyo 104-0028 (JP)
(72) Inventor: YAJIMA, Tatsuya, Sodegaura-shi, Chiba 299-0265 (JP); CHIKAMOTO, Takuya, Sodegaura-shi, Chiba 299-0265 (JP); YAMAMOTO, Naomi, Tokyo 105-7122 (JP)
(74) Representative: Hoffmann Eitle
(86) International application number: PCT/JP2022/003374
(87) International publication number: WO 2022/163823

(57) **Abstract**

A structural polyurethane adhesive contains a polyisocyanate component and a polyol component. The polyisocyanate component contains a first isocyanate component containing a first isocyanate group-terminated urethane prepolymer that is a reaction product of a first material polyisocyanate consisting of an aromatic polyisocyanate and a first material polyol containing a macropolyol, a second isocyanate component containing a second isocyanate group-terminated urethane prepolymer that is a reaction product of a second material polyisocyanate consisting of an araliphatic polyisocyanate and/or an aliphatic polyisocyanate and a second material polyol containing a polyether polyol having a number average molecular weight of 160 or more and 4900 or less, and a third isocyanate component containing a carbodiimide-modified product of an aromatic polyisocyanate. The ratio of the second isocyanate component with respect to the total amount of the first isocyanate component, the second isocyanate component, and the third isocyanate component is 2% by mass or more and 35% by mass or less.

## Description

### TECHNICAL FIELD

The present invention relates to a structural polyurethane adhesive.

### BACKGROUND ART

Conventionally, structural adhesive has been used for bonding a plurality of members in a structure formed from the members. Examples of the structure include automobiles and buildings. Examples of the structural adhesive include a two-component curable structural polyurethane adhesive including a main agent (component 1) and a curing agent (component 2).

For the structural polyurethane adhesive, more specifically, the following formulation has been proposed. That is to say, the curing agent (component 1) contains polyoxypropylene triol and 1,4-butanediol. Further, the main agent (component 2) contains a polymer containing a free isocyanate group and a carbodiimide of 4,4'-methylenediphenyl diisocyanate (MDI). Further, the polymer containing a free isocyanate group contains a reaction product of 4,4'-methylenediphenyl diisocyanate (MDI) and a polyoxypropylene diol and polyoxypropylene polyoxyethylene triol. (For example, see Patent Document 1 (Example 1)).

### Citation List

### Patent Document

Patent Document 1: Japanese Translation of PCT International Application Publication No. 2015-531020

### SUMMARY OF THE INVENTION

### PROBLEM TO BE SOLVED BY THE INVENTION

However, the structural polyurethane adhesive is required to have further more improved adhesive properties.

The present invention provides a structural polyurethane adhesive having excellent adhesive properties.

### MEANS FOR SOLVING THE PROBLEM

The present invention [1] includes a structural polyurethane adhesive including: a polyisocyanate component; and a polyol component, wherein the polyisocyanate component contains: a first isocyanate component containing a first isocyanate group-terminated urethane prepolymer that is a reaction product of a first material polyisocyanate consisting of an aromatic polyisocyanate and a first material polyol containing a macropolyol; a second isocyanate component containing a second isocyanate group-terminated urethane prepolymer that is a reaction product of a second material polyisocyanate consisting of an araliphatic polyisocyanate and/or an aliphatic polyisocyanate and a second material polyol containing a polyether polyol having a number average molecular weight of 160 or more and 4900 or less; and a third isocyanate component containing a carbodiimide-modified product of an aromatic polyisocyanate, and wherein a ratio of the second isocyanate component with respect to a total amount of the first isocyanate component, the second isocyanate component, and the third isocyanate component is 2% by mass or more and 35% by mass or less.

The present invention [2] includes the structural polyurethane adhesive described in the above-described [1], wherein the second material polyisocyanate contains at least one selected from the group consisting of xylylene diisocyanate, hexamethylene diisocyanate, pentamethylene diisocyanate, isophorone diisocyanate, methylene bis (cyclohexyl isocyanate), and bis (isocyanatomethyl) cyclohexane.

The present invention [3] includes the structural polyurethane adhesive described in the above-described [1] or [2], wherein a content ratio of the second material polyisocyanate with respect to a total amount of the second isocyanate component is 1.0% by mass or less.

The present invention [4] includes the structural polyurethane adhesive described in any one of the above-described [1] to [3], wherein the second material polyol contains a polyether polyol having an average number of hydroxyl groups of 2 or more and 3 or less.

The present invention [5] includes the structural polyurethane adhesive described in any one of the above-described [1] to [4], being a two-component curable adhesive including a main agent containing the polyisocyanate component and a curing agent containing the polyol component.

The present invention [6] includes the structural polyurethane adhesive described in any one of the above-described [1] to [5], being a solventless-type adhesive.

### EFFECTS OF THE INVENTION

In the structural polyurethane adhesive of the present invention, the polyisocyanate component contains the first isocyanate component, the second isocyanate component, and the third isocyanate component. And the first isocyanate component contains the first isocyanate group-terminated urethane prepolymer that is a reaction product of the first material polyisocyanate consisting of an aromatic polyisocyanate and the first material polyol containing a macropolyol. Further, the second isocyanate component contains the second isocyanate group-terminated urethane prepolymer that is a reaction product of the second material polyisocyanate consisting of an araliphatic polyisocyanate and/or an aliphatic polyisocyanate and a second material polyol containing a polyether polyol having a number average molecular weight of 160 or more and 4900 or less. Furthermore, the third isocyanate component contains a carbodiimide-modified product of an aromatic polyisocyanate. In addition, the ratio of the second isocyanate component with respect to the total amount of the first isocyanate component, the second isocyanate component, and the third isocyanate component falls within a predetermined range. Thus, the structural polyurethane adhesive of the present invention has excellent adhesive properties.

### DESCRIPTION OF THE EMBODIMENTS

The structural polyurethane adhesive of the present invention is a structural adhesive defined by JIS K 6800 (1985). Specifically, the structural polyurethane adhesive is a "reliable adhesive that can bear heavy loads for a long period of time".

More specifically, the structural polyurethane adhesive contains a polyisocyanate component and a polyol component as essential components. The polyisocyanate component contains a liberated (free) isocyanate group. The polyol component contains a liberated (free) hydroxyl group.

The structural polyurethane adhesive may be a one-component curable adhesive in which a polyisocyanate component and a polyol component are mixed in advance. Alternatively, the structural polyurethane adhesive may be a two-component curable adhesive that includes a main agent (A solution) containing a polyisocyanate component, and a curing agent (B solution) containing a polyol component. For the two-component curable adhesive, the main agent and curing agent that are individually prepared are mixed together when being used. In view of workability, handleability, etc., the structural polyurethane adhesive is preferably a two-component curable adhesive.

The polyisocyanate component contains a first isocyanate component, a second isocyanate component, and a third isocyanate component. The first isocyanate component and the second isocyanate component each contain a urethane prepolymer having two or more isocyanate groups at its molecule terminals (hereinafter, referred to as an isocyanate group-terminated urethane prepolymer). The third isocyanate component contains the carbodiimide-modified product described below.

More specifically, the first isocyanate component contains a first isocyanate group-terminated urethane prepolymer. The first isocyanate group-terminated urethane prepolymer is a reaction product of the first material polyisocyanate and the first material polyol. The first material polyisocyanate and the first material polyol are reacted so that the isocyanate group exceeds the hydroxyl group.

The first material polyisocyanate consists of an aromatic polyisocyanate. Examples of the aromatic polyisocyanate include an aromatic polyisocyanate monomer and an aromatic polyisocyanate derivative.

Examples of the aromatic polyisocyanate monomer include an aromatic diisocyanate. Examples of the aromatic diisocyanate include tolylene diisocyanate, phenylene diisocyanate, diphenyl diisocyanate, naphthalene diisocyanate, diphenyl methane diisocyanate, toluidine diisocyanate, and diphenyl ether diisocyanate. These can be used singly or in combination of two or more or more.

Examples of the aromatic polyisocyanate derivative include a modified product obtained by modifying the above-described aromatic polyisocyanate monomer by a known method. More specifically, examples of the aromatic polyisocyanate derivative include a uretdione-modified product, an isocyanurate-modified product, an allophanate-modified product, a polyol-modified product, a biuret-modified product, a urea-modified product, an oxadiazinetrione-modified product, and a carbodiimide-modified product. Examples of the aromatic polyisocyanate derivative further include polymethylenepolyphenylene polyisocyanate. These can be used singly or in combination of two or more.

These aromatic polyisocyanates can be used singly or in combination of two or more. As the aromatic polyisocyanate, in view of adhesive properties, an aromatic polyisocyanate monomer is preferable, an aromatic diisocyanate is more preferable, and diphenylmethane diisocyanate is even more preferable.

In other words, in view of adhesive properties, the first material polyisocyanate preferably consists of a monomer of diphenylmethane diisocyanate.

The first material polyol contains a macropolyol as an essential component. The macropolyol is an organic compound having two or more hydroxyl groups and having a relatively high molecular weight.

The macropolyol in the first material polyol (hereinafter, referred to as the first macropolyol) has a number average molecular weight of 200 or more. Further, the first macropolyol normally has a number average molecular weight of 15000 or less. The number average molecular weight is calibrated with standard polystyrene measured with gel permeation chromatograph (hereinafter, the same applies).

The macropolyol is not especially limited, and examples thereof include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These macropolyols can be used singly or in combination of two or more.

As the macropolyol in the first material polyol, a polyether polyol, a polyester polyol, and a polycarbonate polyol are preferable. A polyether polyol is more preferable.

Examples of the polyether polyol include a polyoxyalkylene (C2-3) polyol and a polytetramethylene ether polyol. A polyoxyalkylene (C2-3) polyol is preferable.

More specifically, examples of the polyoxyalkylene (C2-3) polyol include a polyoxyethylene polyol, a polyoxypropylene polyol, a polyoxytriethylene polyol, and a polyoxyethylene-polyoxypropylene polyol (random or block copolymer). These polyoxyalkylene (C2-3) polyols can be used singly or in combination of two or more.

As the polyoxyalkylene (C2-3) polyol, a polyoxypropylene polyol is preferable, and polyoxypropylene glycol is more preferable.

The first macropolyol has a number average molecular weight of, for example, 200 or more, preferably 300 or more, more preferably 400 or more. Further, the number average molecular weight of the first macropolyol is, for example, 15000 or less, preferably 13000 or less, more preferably 12000 or less, even more preferably 10000 or less, even more preferably 8000 or less, particularly preferably 5000 or less.

The first macropolyol has a hydroxyl equivalent of, for example, 150 or more, preferably 200 or more. Further, the hydroxyl equivalent of the first macropolyol is, for example, 10000 or less, preferably 8000 or less. The hydroxyl equivalent can be calculated from the hydroxyl value.

The first macropolyol has an average number of hydroxyl groups of, for example, 1.8 or more, preferably 2 or more. Further, the average number of hydroxyl groups of the first macropolyol is, for example, 6 or less, preferably 4 or less, more preferably 3 or less.

The hydroxyl value and the hydroxyl equivalent can be obtained in accordance with the A method or B method of JIS K 1557-1 (2007). Further, the average number of hydroxyl groups can be calculated from the hydroxyl value, the hydroxyl equivalent, and the molecular weight. Furthermore, the hydroxyl value, the hydroxyl equivalent, and the average number of hydroxyl groups can be calculated from the charged ratio of the material components (the same applies hereinafter).

As the first material polyol, particularly preferably, the first macropolyol having an average number of hydroxyl groups of 2 and the first macropolyol having an average number of hydroxyl groups of 3 are used in combination.

When the first macropolyol having an average number of hydroxyl groups of 2 and the first macropolyol having an average number of hydroxyl groups of 3 are used in combination, the first macropolyol having an average number of hydroxyl groups of 3 is, for example, more than 50 parts by mass, preferably 60 parts by mass or more with respect to 100 parts by mass of the total amount of the first macropolyols. Further, the first macropolyol having an average number of hydroxyl groups of 3 is, for example, 90 parts by mass or less, preferably 80 parts by mass or less. Furthermore, the first macropolyol having an average number of hydroxyl groups of 2 is, for example, 10 parts by mass or more, preferably 20 parts by mass or more. The first macropolyol having an average number of hydroxyl groups of 2 is, for example, less than 50 parts by mass, preferably 40 parts by mass or less.

Furthermore, the first material polyol contains a low molecular-weight polyol as an optional component. The low molecular-weight polyol is an organic compound having two or more hydroxyl groups and having a relatively low molecular weight.

The low molecular-weight polyol in the first material polyol (hereinafter, referred to as the first low molecular-weight polyol) has a molecular weight of less than 200, preferably 180 or less.

Examples of the first low molecular-weight polyol include dihydric alcohols, trihydric alcohols, and tetrahydric or more alcohols. Examples of the dihydric alcohols include ethylene glycol, 1,2-propanediol, 1,3-propanediol, 1,2-butanediol, 1,3-butanediol, 1,4-butanediol, 1,5-pentanediol, 1,6-hexanediol, neopentyl glycol, diethylene glycol, triethylene glycol, and dipropylene glycol. Examples of the trihydric alcohols include glycerin and trimethylol propane. Examples of the tetrahydric or more alcohols include pentaerythritol and diglycerin. These can be used singly or in combination of two or more.

The content ratio of the first low molecular-weight polyol is appropriately selected in a range in which the excellent effects of the present invention are not reduced. More specifically, the content ratio of the first low molecular-weight polyol is, for example, 30 parts by mass or less, preferably 20 parts by mass or less, more preferably 10 parts by mass or less, particularly preferably 0 part by mass with respect to 100 parts by mass of the total amount of the first material polyols. That is to say, in view of adhesive properties, the first material polyol preferably does not contain the first low molecular-weight polyol and consists of the first macropolyol.

Then, the first isocyanate group-terminated urethane prepolymer is obtained by reacting the first material polyisocyanate with the first material polyol by a known method. More specifically, the first material polyisocyanate and the first material polyol are blended in a predetermined ratio, thereby causing a urethane-forming reaction.

In the urethane-forming reaction, the equivalent ratio (NCO/OH) of the isocyanate group in the first material polyisocyanate with respect to the hydroxyl group in the first material polyol is, for example, more than 1, preferably 1.1 or more, more preferably 1.3 or more, even more preferably 1.5 or more, particularly preferably 1.9 or more. Further, the equivalent ratio (NCO/OH) is, for example, 50, preferably 15 or less, more preferably 10 or less, even more preferably 3 or less, particularly preferably 2.5 or less.

In the urethane-forming reaction, a known polymerization method is employed. Examples of the polymerization method include bulk polymerization and solution polymerization. In the bulk polymerization, for example, the above-described components are blended to allow them to react under a nitrogen atmosphere. In the solution polymerization, for example, the above-described components are added to a known organic solvent to allow them to react under a nitrogen atmosphere. The urethane-forming reaction is carried out at a reaction temperature of, for example, 50°C or more, and, for example, 120°C or less, preferably 100°C or less. Further, the reaction is carried out for a reaction time of, for example, 0.5 hour or more, preferably, 1 hour or more, and, for example, 24 hours or less, preferably 15 hours or less. In the solution polymerization, the blending ratio of the organic solvent is appropriately set depending on the purpose and use. For the urethane-forming reaction, bulk polymerization (solventless reaction) is preferably employed.

Further, in the above-described urethane-forming reaction, as necessary, a known urethane-forming catalysts is added. Further, as necessary, the unreacted polyisocyanate is removed by a known method. In this manner, a first isocyanate component containing a first isocyanate group-terminated urethane prepolymer is produced.

As the first isocyanate group-terminated urethane prepolymer, a first isocyanate group-terminated urethane prepolymer that is a reaction product of an aromatic polyisocyanate and a polyether polyol is preferable. A first isocyanate group-terminated urethane prepolymer that is a reaction product of diphenylmethane diisocyanate and a polyether polyol is more preferable.

Further, as necessary, the first isocyanate component may contain a liberated (unreacted) first material polyisocyanate, an organic solvent, and a urethane-forming catalyst. Furthermore, the liberated (unreacted) first material polyisocyanate, the organic solvent, and the urethane-forming catalyst may be removed by a known removal method. Examples of the removal method include extraction and distillation.

In view of adhesive properties, the content ratio of the liberated (unreacted) first material polyisocyanate with respect to the total amount of the polyisocyanate component is, for example, 8.0% by mass or less, preferably 5.0% by mass or less. Further, the content ratio of the first isocyanate group-terminated urethane prepolymer with respect to the total amount of the first isocyanate component is, for example, 92.0% by mass or more, preferably 95.0% by mass or more, and normally 100% by mass or less.

The first isocyanate component (solid content) has an average number of isocyanate groups of, for example, 1.2 or more, preferably 1.5 or more, more preferably 2 or more. Further, the average number of isocyanate groups of the first isocyanate component (solid content) is, for example, 4 or less, preferably 3 or less.

The first isocyanate component (solid content) has an isocyanate equivalent of, for example, 84 or more, preferably 150 or more, more preferably 168 or more. Further, the isocyanate equivalent of the first isocyanate component (solid content) is, for example, 3500 or less, preferably 2800 or less, more preferably 2335 or less. The isocyanate equivalent is the same as the amine equivalent, and can be obtained by the A method or B method of JIS K 1603-1 (2007).

The content amount (the isocyanate group content, NCO%) of the isocyanate group of the first isocyanate component (solid content) is, for example, 1.2% by mass or more, preferably 1.5% by mass or more, more preferably 1.8% by mass or more, even more preferably 2.0% by mass or more, particularly preferably 2.1% by mass or more. Further, the content amount of the isocyanate group of the first isocyanate component (solid content) is, for example, 50% by mass or less, preferably 28% by mass or less, more preferably 25% by mass or less, even more preferably 10% by mass or less, particularly preferably 6% by mass or less.

The solid content of the first isocyanate component has a viscosity at 25°C of, for example, 1000 mPa·s or more, preferably 5000 mPa·s or more. Further, the viscosity of the solid content of the first isocyanate component at 25°C is, for example, 200000 mPa·s or less, preferably 100000 mPa·s or less. The viscosity is measured using a B-type viscometer (the same applies hereinafter).

The second isocyanate component contains a second isocyanate group-terminated urethane prepolymer. The second isocyanate group-terminated urethane prepolymer is a reaction product of the second material polyisocyanate and the second material polyol. The second material polyisocyanate and the second material polyol are reacted so that the isocyanate group exceeds the hydroxyl group.

The second material polyisocyanate consists of an araliphatic polyisocyanate and/or an aliphatic polyisocyanate.

Examples of the araliphatic polyisocyanate include an araliphatic polyisocyanate monomer. Examples of the araliphatic polyisocyanate monomer include an araliphatic diisocyanate. Examples of the araliphatic diisocyanate include xylylene diisocyanate (XDI), tetramethyl xylylene diisocyanate, and ω,ω'-diisocyanate1,4-diethylbenzene. Examples of the xylylene diisocyanate include 1,3-xylylene diisocyanate and 1,4-xylylene diisocyanate. These can be used singly or in combination of two or more. An araliphatic diisocyanate is preferable, xylylene diisocyanate is even more preferable, and 1,3-xylylene diisocyanate is even more preferable.

Examples of the aliphatic polyisocyanate include a chain aliphatic polyisocyanate and an alicyclic polyisocyanate.

Examples of the chain aliphatic polyisocyanate include a chain aliphatic polyisocyanate monomer. Examples of the chain aliphatic polyisocyanate monomer include a chain aliphatic diisocyanate. Examples of the chain aliphatic diisocyanate include trimethylene diisocyanate, tetramethylenediisocyanate, pentamethylene diisocyanate (PDI), hexamethylene diisocyanate (HDI), 1,2-propanediisocyanate, 1,2-butanediisocyanate, 2,3-butanediisocyanate, 1,3-butanediisocyanate, 2,4,4-trimethylhexamethylene diisocyanate, 2,2,4-trimethylhexamethylene diisocyanate, and 2,6-diisocyanate methyl caproate. These can be used singly or in combination of two or more. A chain aliphatic diisocyanate is preferable, and pentamethylene diisocyanate and hexamethylene diisocyanate are even more preferable.

Examples of the alicyclic polyisocyanate include an alicyclic polyisocyanate monomer. Examples of the alicyclic polyisocyanate monomer include an alicyclic diisocyanate. Examples of the alicyclic diisocyanate include isophorone diisocyanate (IPDI), norbornene diisocyanate (NBDI), methylene bis (cyclohexyl isocyanate) (H₁₂MDI), and bis (isocyanatomethyl) cyclohexane (H₆XDI). These can be used singly or in combination of two or more. An alicyclic diisocyanate is preferable, isophorone diisocyanate, methylene bis (cyclohexyl isocyanate), and bis (isocyanatomethyl) cyclohexane are even more preferable.

Examples of the araliphatic polyisocyanate and/or aliphatic polyisocyanate also include the derivatives of the above-described monomers. Examples of the derivatives include a derivative of an araliphatic polyisocyanate monomer, a derivative of a chain aliphatic polyisocyanate monomer, and a derivative of an alicyclic polyisocyanate monomer. Examples of the derivatives further include a modified product obtained by modifying the above-described monomer by a known method. More specifically, examples of the derivatives include a uretdione-modified product, an isocyanurate-modified product, an allophanate-modified product, a polyol-modified product, a biuret-modified product, a urea-modified product, an oxadiazinetrione-modified product, and a carbodiimide-modified product. These can be used singly or in combination of two or more.

These araliphatic polyisocyanates and/or aliphatic polyisocyanates can be used singly or in combination of two or more. As the araliphatic polyisocyanate and/or aliphatic polyisocyanate, in view of adhesive properties, an araliphatic polyisocyanate monomer, a chain aliphatic polyisocyanate monomer, and an alicyclic polyisocyanate monomer are preferable, an araliphatic diisocyanate, a chain aliphatic diisocyanate, and an alicyclic diisocyanate are more preferable, and xylylene diisocyanate, hexamethylene diisocyanate, pentamethylene diisocyanate, isophorone diisocyanate, methylene bis (cyclohexyl isocyanate), and bis (isocyanatomethyl) cyclohexane are even more preferable.

In other words, in view of adhesive properties, the second material polyisocyanate preferably contains at least one selected from the group consisting of xylylene diisocyanate, hexamethylene diisocyanate, pentamethylene diisocyanate, isophorone diisocyanate, methylene bis (cyclohexyl isocyanate), and bis (isocyanatomethyl) cyclohexane.

As the araliphatic polyisocyanate and/or aliphatic polyisocyanate, in view of adhesive properties, xylylene diisocyanate, hexamethylene diisocyanate, pentamethylene diisocyanate, and bis (isocyanatomethyl) cyclohexane are particularly preferable. In other words, in view of adhesive properties, the second material polyisocyanate particularly preferably contains at least one selected from the group consisting of xylylene diisocyanate, hexamethylene diisocyanate, pentamethylene diisocyanate, and bis (isocyanatomethyl) cyclohexane.

As the araliphatic polyisocyanate and/or aliphatic polyisocyanate, in view of adhesive properties, xylylene diisocyanate is particularly preferable. In other words, in view of adhesive properties, the second material polyisocyanate particularly preferably contains xylylene diisocyanate.

The second material polyol contains a polyether polyol as an essential component. In the second material polyol, the polyether polyol may be a polyether polyol having a relatively low molecular weight (a molecular weight of less than 300). Alternatively, the polyether polyol may be a polyether polyol having a relatively high molecular weight (a molecular weight of 300 or more).

Examples of the polyether polyol in the second material polyol include the same polyether polyols described above as the first macropolyols (however, except for their molecular weights).

As the polyether polyol, a polyoxyalkylene (C2-3) polyol is preferable, a polyoxypropylene polyol is more preferable, and a polyoxypropylene glycol is even more preferable.

In the second material polyol, in view of adhesive properties, the polyether polyol has a number average molecular weight of 160 or more, preferably 240 or more, more preferably 300 or more, even more preferably 400 or more. Further, in view of adhesive properties, the number average molecular weight of the polyether polyol is 4900 or less, preferably 4800 or less, more preferably 4500 or less, even more preferably 4000 or less, even more preferably 3000 or less, even more preferably 2000 or less, even more preferably 1500 or less, even more preferably 800 or less, and particularly preferably 500 or less.

In the second material polyol, in view of adhesive strength, the polyether polyol has an average number of hydroxyl groups of, for example, 1.8 or more, preferably 2 or more. Further, in view of adhesive strength, the average number of hydroxyl groups of the polyether polyol is, for example, 6 or less, preferably 4 or less, more preferably 3 or less, particularly preferably 2.5 or less.

In other words, the second material polyol preferably contains a polyether polyol having an average number of hydroxyl groups of 2 or more and 4 or less, and more preferably contains a polyether polyol having an average number of hydroxyl groups of 2 or more and 3 or less.

Further, the second material polyol may contain another polyol as an optional component. The other polyol is a polyol other than the above-described polyether polyol. Examples of the other polyol include another macropolyol (hereinafter, referred to as a second macropolyol), and another low molecular-weight polyol (hereinafter, referred to as a second low molecular-weight polyol).

The other macropolyol (the second macropolyol) is a macropolyol other than the above-described polyether polyol. The other macropolyol is not especially limited and examples thereof include known macropolyols. These other macropolyols can be used singly or in combination of two or more.

The other macropolyol (the second macropolyol) has a number average molecular weight of, for example, 300 or more, preferably 400 or more, more preferably 500 or more. Further, the number average molecular weight of the other macropolyol (the second macropolyol) is, for example, 15000 or less, preferably 13000 or less, more preferably 12000 or less, even more preferably 10000 or less, even more preferably 8000 or less, particularly preferably 5000 or less.

Examples of the other low molecular-weight polyol (the second low molecular-weight polyol) include the low molecular-weight polyols described above as the first material polyols. These other low molecular-weight polyols can be used singly or in combination of two or more.

The other low molecular-weight polyol (the second low molecular-weight polyol) has a molecular weight of less than 300, preferably 250 or less.

In the second material polyol, the content ratio of the polyols (the second macropolyol and the second low molecular-weight polyol) other than the polyether polyol is appropriately selected in a range in which the excellent effects of the present invention are not reduced.

More specifically, the content ratio of the other macropolyol (the second macropolyol) with respect to 100 parts by mass of the total amount of the second material polyol is, for example, 30 parts by mass or less, preferably 20 parts by mass or less, more preferably 10 parts by mass or less, particularly preferably 0 parts by mass.

Further, the content ratio of the other low molecular-weight polyol (the second low molecular-weight polyol) with respect to 100 parts by mass of the total amount of the second material polyol is, for example, 30 parts by mass or less, preferably 20 parts by mass or less, more preferably 10 parts by mass or less, particularly preferably 0 parts by mass.

That is to say, in view of adhesive strength, the second material polyol preferably consists of the polyether polyol without containing the polyols (the second macropolyol and the second low molecular-weight polyol) other than the polyether polyol.

Then, the second isocyanate group-terminated urethane prepolymer is obtained by reacting the second material polyisocyanate with the second material polyol by a known method. More specifically, the second material polyisocyanate and the second material polyol are blended in a predetermined ratio to cause a urethane-forming reaction.

In the urethane-forming reaction, the equivalent ratio (NCO/OH) of the isocyanate group in the second material polyisocyanate with respect to the hydroxyl group in the second material polyol is, for example, more than 1, preferably 1.1 or more, more preferably 1.3 or more, even more preferably 1.5 or more, particularly preferably 1.9 or more. Further, the equivalent ratio (NCO/OH) is, for example, 50, preferably 30 or less, more preferably 20 or less, even more preferably 10 or less, particularly preferably 8 or less.

In the urethane-forming reaction, a known polymerization method is employed. Examples of the polymerization method include bulk polymerization and solution polymerization. In bulk polymerization, for example, the above-described components are blended and reacted under a nitrogen atmosphere. In solution polymerization, for example, the above-described components are added to a known organic solvent and reacted under a nitrogen atmosphere. The urethane-forming reaction is carried out at a reaction temperature of, for example, 50°C or more, and, for example, 120°C or less, preferably 100°C or less. Further, the reaction is carried out for a reaction time of, for example, 0.5 hours or more, preferably 1 hour or more, and, for example, 24 hours or less, preferably 15 hours or less. In the solution polymerization, the blending ratio of the organic solvent is appropriately set depending on the purpose and use. In the urethane-forming reaction, bulk polymerization (solventless reaction) is preferably employed.

Further, in the above-described urethane-forming reaction, as necessary, a known urethane-forming catalyst is added. Further, as necessary, the unreacted polyisocyanate is removed by a known method. In this manner, a second isocyanate component containing a second isocyanate group-terminated urethane prepolymer is produced.

As the second isocyanate group-terminated urethane prepolymer, a second isocyanate group-terminated urethane prepolymer that is a reaction product of an araliphatic polyisocyanate and a polyether polyol is preferable, and a second isocyanate group-terminated urethane prepolymer that is a reaction product of xylylene diisocyanate and a polyether polyol is more preferable.

Further, if necessary, the second isocyanate component may contain a liberated (unreacted) second material polyisocyanate, an organic solvent, and a urethane-forming catalyst. Furthermore, the liberated (unreacted) second material polyisocyanate, the organic solvent, and the urethane-forming catalyst may be removed by a known removal method. Examples of the removal method include extraction and distillation. The second isocyanate component is preferably distilled and, in view of improving the adhesive strength, the second isocyanate component is more preferably distilled by a thin-film distillation.

In view of adhesive strength, the content ratio of the liberated (unreacted) second material polyisocyanate with respect to the total amount of the second isocyanate component is, for example, 5.0% by mass or less, preferably 1.0% by mass or less. Further, the content ratio of the second isocyanate group-terminated urethane prepolymer with respect to the total amount of the second isocyanate component is, for example, 95.0% by mass or more, preferably 99.0% by mass or more, and normally 100% by mass or less.

The second isocyanate component (solid content) has an average number of isocyanate groups of, for example, 1.2 or more, preferably 1.5 or more, more preferably 2 or more. Further, the average number of the isocyanate groups of the second isocyanate component (solid content) is, for example, 4 or less, preferably 3 or less.

The second isocyanate component (solid content) has an isocyanate equivalent of, for example, 84 or more, preferably 150 or more, even more preferably 168 or more. Further, the isocyanate equivalent of the second isocyanate component (solid content) is, for example, 3500 or less, preferably 2800 or less, even more preferably 2335 or less.

The content (isocyanate group content, NCO%) of the isocyanate group of the second isocyanate component (solid content) is, for example, 1.2% by mass or more, preferably 1.5% by mass or more, more preferably 1.8% by mass or more, even more preferably 2.0% by mass or more. Further, the content of the isocyanate group of the second isocyanate component (solid content) is, for example, 50% by mass or less, preferably 28% by mass or less, more preferably 25% by mass or less, even more preferably 12% by mass or less.

The solid content of the second isocyanate component has a viscosity at 25°C of, for example, 1000 mPa·s or more, preferably 5000 mPa·s or more. Further, the viscosity of the solid content of the second isocyanate component at 25°C is, for example, 200000 mPa·s or less, preferably 100000 mPa·s or less, more preferably 50000 mPa·s or less, particularly preferably 10000 mPa·s or less.

Further, the solid content of the second isocyanate component has a viscosity at 30°C of, for example, 100 mPa s or more, preferably 1000 mPa s or more. Further, the viscosity of the solid content of the second isocyanate component at 30°C is, for example, 500000 mPa s or less, preferably 200000 mPa·s or less, more preferably 100000 mPa s or less, even more preferably 50000 mPa·s or less, particularly preferably 10000 mPa·s or less.

The third polyisocyanate component contains a carbodiimide-modified product of an aromatic polyisocyanate, and preferably consists of a carbodiimide-modified product of an aromatic polyisocyanate.

The carbodiimide-modified product of an aromatic polyisocyanate is a reaction product obtained by subjecting an aromatic polyisocyanate to a carbodiimide-forming reaction.

Examples of the aromatic polyisocyanate include the aromatic polyisocyanates described above as the first material polyisocyanates, and more specifically include aromatic polyisocyanate monomers and the derivatives thereof. In view of adhesive properties, as the aromatic polyisocyanate, an aromatic polyisocyanate monomer is preferable, an aromatic diisocyanate is more preferable, and diphenylmethane diisocyanate is even more preferable.

Examples of the carbodiimide-forming reaction include a decarboxylation condensation reaction. In the decarboxylation condensation reaction, for example, an aromatic polyisocyanate is heated under the presence of a carbodiimide-forming catalyst.

The carbodiimide-forming catalyst is not especially limited, and examples thereof include a trialkyl phosphate compound, a phosphorene oxide compound, a phosphorene sulfide compound, a phosphine oxide compound, and a phosphine compound. The blending ratio of the carbodiimide-forming catalyst is appropriately set. Further, the reaction conditions for the carbodiimide-forming reaction are appropriately set depending on the type of the aromatic polyisocyanate and the type of the catalyst. Further, if necessary, the aromatic polyisocyanate may be subjected to a carbodiimide-forming reaction under the presence of the above-described organic solvent.

By the carbodiimide-forming reaction, the aromatic polyisocyanate is decarboxylated and condensed, thereby generating a carbodiimide group. As a result, a carbodiimide-modified product of the aromatic polyisocyanate is produced.

Further, if necessary, the third isocyanate component may contain a liberated (unreacted) aromatic polyisocyanate, an organic solvent, and a carbodiimide-forming catalyst. Furthermore, the liberated (unreacted) aromatic polyisocyanate, the organic solvent, and the carbodiimide-forming catalyst may be removed by a known removal method. Examples of the removal method include extraction and distillation.

Further, a commercial product of a carbodiimide-modified product of an aromatic polyisocyanate may be used as the third isocyanate component. Examples of the commercial product include CORONATE MX (a carbodiimide-modified product of diphenylmethane diisocyanate, with an NCO content of 29.0% by mass, and manufactured by Tosoh Corporation).

Then, the polyisocyanate component is prepared by mixing the first isocyanate component, the second isocyanate component, and the third isocyanate component.

With respect to the total amount of the first isocyanate component, the second isocyanate component, and the third isocyanate component, the ratio of the first isocyanate component is, for example, 8% by mass or more, preferably 20% by mass or more, more preferably 30% by mass or more, even more preferably 40% by mass or more. Further, the ratio of the first isocyanate component is, for example, 90% by mass or less, preferably 80% by mass or less, more preferably 70% by mass or less, even more preferably 60% by mass or less. When the ratio of the first isocyanate component falls within the above-described range, particularly excellent adhesive properties are achieved.

With respect to the total amount of the first isocyanate component, the second isocyanate component, and the third isocyanate component, the ratio of the second isocyanate component is 2% by mass or more, preferably 5% by mass or more, more preferably 10% by mass or more, even more preferably 20% by mass or more, particularly preferably 25% by mass or more, in view of adhesive properties. Further, the ratio of the second isocyanate component is 35% by mass or less, preferably 33% by mass or less, more preferably 31% by mass or less, even more preferably 30% by mass or less. When the ratio of the second isocyanate component falls within the above-described range, particularly excellent adhesive properties are achieved.

With respect to the total amount of the first isocyanate component, the second isocyanate component, and the third isocyanate component, the ratio of the third isocyanate component is, for example, 8% by mass or more, preferably 10% by mass or more, more preferably 20% by mass or more, even more preferably 30% by mass or more. Further, the ratio of the third isocyanate component is, for example, 90% by mass or less, preferably 80% by mass or less, more preferably 60% by mass or less, even more preferably 40% by mass or less. When the ratio of the third isocyanate component falls within the above-described range, particularly excellent adhesive properties are achieved.

The method for mixing the first isocyanate component, the second isocyanate component, and the third isocyanate component is not especially limited, and a known method is employed. In this manner, a polyisocyanate component is produced.

The solid content of the polyisocyanate component has a viscosity at 25°C of, for example, 1000 mPa·s or more, preferably 5000 mPa·s or more and, for example, 200000 mPa·s or less, preferably 100000 mPa·s or less.

The polyol component, for example, contains a macropolyol (hereinafter, referred to as the third macropolyol).

Examples of the third macropolyol include a polyether polyol, a polyester polyol, a polycarbonate polyol, a polyurethane polyol, an epoxy polyol, a vegetable oil polyol, a polyolefin polyol, an acrylic polyol, and a vinyl monomer-modified polyol. These third macropolyols can be used singly or in combination of two or more. As the third macropolyol, a polyether polyol is preferable.

Examples of the polyether polyol include the polyether polyols described above. More specifically, examples of the polyether polyol include a polyoxyalkylene (C2-3) polyol and a polytetramethylene ether polyol. A polyoxyalkylene (C2-3) polyol is preferable.

More specifically, examples of the polyoxyalkylene (C2-3) polyol include a polyoxyethylene polyol, a polyoxypropylene polyol, a polyoxytriethylene polyol, and a polyoxyethylene-polyoxypropylene polyol (random or block copolymer). These polyoxyalkylene (C2-3) polyols can be used singly or in combination of two or more.

As the macropolyol (the third macropolyol) in the polyol component, a polyoxyethylene-polyoxypropylene polyol (block copolymer) is preferable.

In view of adhesive strength, in the polyol component, the third macropolyol has a number average molecular weight of, for example, 500 or more, preferably 1000 or more, more preferably 1500 or more. Further, in view of adhesive strength, the number average molecular weight of the third macropolyol is 10000 or less, more preferably 7500 or less, more preferably 5000 or less.

In the polyol component, the third macropolyol has a hydroxyl equivalent of, for example, 150 or more, preferably 200 or more. Further, the hydroxyl equivalent of the third macropolyol is, for example, 10000 or less, preferably 8000 or less.

In view of adhesive strength, in the polyol component, the third macropolyol has an average number of hydroxyl groups of, for example, 1.9 or more, preferably 2.0 or more, more preferably 2.3 or more. Further, in view of adhesive strength, the average number of hydroxyl groups of the third macropolyol is, for example, 4.0 or less, preferably 3.5 or less, more preferably 3.0 or less.

Further, as necessary, the polyol component may contain a low molecular-weight polyol (hereinafter, referred to as a third low molecular-weight polyol). The third low molecular-weight polyol has a molecular weight of less than 200, preferably 180 or less. Examples of the third low molecular-weight polyol include the above-described first low molecular-weight polyols. These third low molecular-weight polyols can be used singly or in combination of two or more.

The polyol component preferably contains a third low molecular-weight polyol. That is to say, the polyol component preferably consists of the third macropolyol and the third low molecular-weight polyol.

The content ratio of the third low molecular-weight polyol with respect to the polyol component is appropriately selected in a range in which the excellent effects of the present invention are not reduced. More specifically, the content ratio of the third low molecular-weight polyol with respect to 100 parts by mass of the total amount of the polyol component is, for example, 30 parts by mass or less, preferably 20 parts by mass or less, more preferably 15 parts by mass or less. Further, the content ratio of the third low molecular-weight polyol with respect to 100 parts by mass of the total amount of the polyol component is, for example, 0 parts by mass or more, preferably 1 part by mass or more, more preferably 5 parts by mass or more.

Further, as necessary, the structural polyurethane adhesive may contain an additive. Examples of the additive include plasticizers, fillers, compatibilizing agents, urethane-forming catalysts, anti-aging agents, antioxidants, ultraviolet absorbers, heat-resistant stabilizers, polymer photostabilizers, organic solvents, pigments, dyes, antifoaming agents, dispersants, leveling agents, thixotropy-enhancing agents, antiblocking agents, mold release agents, lubricants, interlayer adjusters, and viscosity modifiers. The content ratio of the additive is not especially limited and is appropriately set depending on the purpose and use.

The additive may be added, for example, to a mixture of a polyisocyanate component and a polyol component (for example, a one-component curable adhesive, etc.). Further, the additive may be contained, for example, in the main agent described below, in the curing agent described below, or in both of them.

On the other hand, in view of workability, the structural polyurethane adhesive preferably does not contain an organic solvent. In other words, the structural polyurethane adhesive is preferably a solventless-type adhesive.

In the solventless-type adhesive, the polyisocyanate component is, for example, prepared without using an organic solvent, or prepared by using an organic solvent and thereafter removing the organic solvent by a known method.

Further, in the solventless-type adhesive, the polyol component is, for example, prepared without using an organic solvent, or preparing by using an organic solvent and thereafter removing the organic solvent by a known method.

Further, the structural polyurethane adhesive is preferably a two-component curable adhesive including a main agent containing a polyisocyanate component and a curing agent containing a polyol component. The two-component curable adhesive is a resin composition kit (two-component kit) for forming a cured product by separately preparing the main agent and the curing agent and blending (mixing) them together when using them. In other words, the main agent and the curing agent are mixed, thereby obtaining a resin mixture (polyurethane mixture), and the resin mixture is subjected to a curing reaction, thereby obtaining a cured product (polyurethane cured product).

Then, in the above-described structural polyurethane adhesive, the polyisocyanate component contains the first isocyanate component, the second isocyanate component, and the third isocyanate component. And the first isocyanate component contains a first isocyanate group-terminated urethane prepolymer that is a reaction product of the first material polyisocyanate consisting of an aromatic polyisocyanate and the first material polyol containing a macropolyol. Further, the second isocyanate component contains a second isocyanate group-terminated urethane prepolymer that is a reaction product of the second material polyisocyanate consisting of an araliphatic polyisocyanate and/or an aliphatic polyisocyanate and a second material polyol containing a polyether polyol having a number average molecular weight of 160 or more and 4900 or less. Furthermore, the third isocyanate component contains a carbodiimide-modified product of an aromatic polyisocyanate. And with respect to the total amount of the first isocyanate component, the second isocyanate component, and the third isocyanate component, the ratio of the second isocyanate component falls within a predetermined range. Thus, the above-described structural polyurethane adhesive has excellent adhesive properties.

Therefore, the above-described structural polyurethane adhesive is suitably used to bond a plurality of members in a structure formed from the members. Examples of the structure include buildings, automobiles, transportation systems, and ships.

In the use of the structural polyurethane adhesive, for example, a mixture containing the polyisocyanate component and the polyol component is applied to the members, cured, and, as necessary, aged by a known method.

In view of workability, the mixture containing the polyisocyanate component and the polyol component has a viscosity at 25°C of, for example, 100 mPa·s or more, preferably 300 mPa·s or more. Further, the viscosity of the mixture at 25°C is, for example, 500000 mPa·s or less, preferably 100000 mPa·s or less, more preferably 50000 mPa·s or less.

Further, the conditions for the curing and the conditions of the aging are appropriately set. More specifically, the curing is carried out at a curing temperature of, for example, 10°C or more, preferably 20°C or more. Further, the curing temperature is, for example, 200°C or less, preferably 150°C or less. Further, the curing is carried out for a curing time of, for example, 5 minutes or more, preferably 10 minutes or more. Further, the curing time is, for example, 10 hours or less, preferably 5 hours or less. Further, the aging is carried out at an aging temperature of, for example, 10°C or more, preferably 20°C or more. Further, the aging temperature is, for example, 80°C or less, preferably 70°C or less. Further, the aging is carried out for an aging time of, for example, 1 hour or more, preferably 2 hours or more. Further, the aging time is, for example, 2 weeks or less, preferably 1 week or less.

In this manner, the structural polyurethane adhesive is cured, and the structural polyurethane adhesive is enabled to bond the members well.

### Example

The present invention is described next with reference to Examples and Comparative Examples. The present invention is not limited to Examples in any way. The "parts" and "%" are based on mass unless otherwise specified. The specific numeral values used in the description below, such as mixing ratios (content ratios), physical property values, and parameters, can be replaced with the corresponding mixing ratios (content ratios), physical property values, and parameters in the above-described "DESCRIPTION OF THE EMBODIMENTS", including the upper limit values (numeral values defined with "or less", and "less than") or the lower limit values (numeral values defined with "or more", and "more than").

### <Monomer Concentration>

The concentration of the monomer (the first material polyisocyanate or the second material polyisocyanate) remaining after the preparation of the first isocyanate component and the second isocyanate component was measured as follows.

### (1) Standard Solution for First Isocyanate Component

COSMONATE PH (B) (that is a trade name of MDI, manufactured by Mitsui Chemicals & SKC Polyurethanes Inc.) was reacted with largely excessive methanol, and the obtained crystal was recrystallized with methanol and purified. Next, the obtained crystal was analyzed by NMR and LC. It was confirmed that the obtained crystal did not contain a solvent and a 2,4'-isomer (area ratio of 1% or less). The obtained crystal is referred to as a "sample of methyl urethanized PH (B)". Next, 10 mg of the sample of methyl urethanized PH (B) was precisely weighed in a 50-mL measuring flask, and the mass was recorded, and the sample was diluted with dichloroethane (DCE) so as to have a total amount of 50 mL. Thereafter, the above-described solution was collected in 50-mL measuring flasks so that the above-described solution was prepared as 2 mL (A solution) and 10 mL (B solution). Each solution was diluted with dichloroethane (DCE) so as to have a total amount of 50 mL. The diluted A solution was prepared as a standard solution equivalent to the quantitative value of 0.4%. Further, the diluted B solution was prepared as a standard solution equivalent to the quantitative value of 2.0%. These standard solutions were measured by HPLC under the following conditions. Then, using the values of the areas in the chromatogram, calibration curves were created.

### (2) Standard Solution for Second Isocyanate Component

1.97 g of dibenzylamine was weighed and diluted with dichloroethane (DCE) in a 50-mL measuring flask. The diluted solution is referred to as a "labelling reagent". Next, 25 mg of TAKENATE 500 (that is a trade name of XDI, manufactured by Mitsui Chemicals, Inc.) was precisely weighed in a 50-mL measuring flask, and the mass was recorded, and 10 mL of the labelling reagent was added to the XDI. The contents of the flask were allowed to stand for 10 minutes and thereafter diluted with dichloroethane so as to have a total amount of 50 mL. Next, the above-described solution was collected in 50-mL measuring flasks so that the above-described solution was prepared as 1 mL (C solution) and 2 mL (D solution). Each solution was diluted with dichloroethane (DCE) so as to have a total amount of 50 mL. The diluted C solution was prepared as a standard solution equivalent to the quantitative value of 0.5%. Further, the diluted D solution was prepared as a standard solution equivalent to the quantitative value of 1.0%. These standard solutions were measured by HPLC under the following conditions. Then, using the values of the areas in the chromatogram, calibration curves were created.

### (3) Measurement

Measurement samples were prepared from the first isocyanate component and the second isocyanate component and measured by HPLC as follows.

### <First Isocyanate Component>

A methyl urethane forming reagent (methanol/1,2-dichloroethane = 1/1 (vol/vol) mixture) was produced in advance. Further, 0.1 g of the first isocyanate component was precisely weighed in a 50-mL measuring flask and the mass was recorded. Then, 10 mL of the methyl urethane compound test reagent was inserted in the measuring flask, and the first isocyanate component was dissolved therein. Thereafter, the measuring flask was covered with a lid and allowed to stand overnight. The contents of the flask were diluted with dichloroethane so as to have a total amount of 50 mL and prepared as a measurement sample.

### <Second Isocyanate Component>

0.1 g of the second isocyanate component was precisely weighed in a 50-mL measuring flask and the mass was recorded.

10 mL of the labelling reagent was added to the measuring flask and allowed to stand for 10 minutes. Thereafter, the contents of the flask were diluted with dichloroethane (DCE) so as to have a total amount of 50 mL and prepared as a measurement sample.

### <HPLC>

The measurement sample was measured by HPLC under the following conditions, and the concentration of the unreacted first material polyisocyanate or unreacted second material polyisocyanate was calculated based on the calibration curve. The concentration of the unreacted second material polyisocyanate when PDI, HDI, and H₆XDI are each used was also measured in the same manner as described above.

### · Conditions for HPLC

Device; Prominence (manufactured by SHIMADZU CORPORATION)
Pump; LC-20AT
Degasser; DGU-20A3
Autosampler; SIL-20A
Column Constant-temperature Bath; COT-20A
Detector; SPD-20A
Column; SHISEIDO SILICA SG-120
Column Temperature; 40°C
Eluting solution
; the first isocyanate component and the standard solution for the first isocyanate component n-hexane/methanol/1,2-dichloroethane = 84/8/8 (volume ratio)
; the second isocyanate component and the standard solution for the second isocyanate component
n-hexane/methanol/1,2-dichloroethane = 90/5/5 (volume ratio)
Flow Rate; 0.2 mL/min
Detection method
; the first isocyanate component and the standard solution for the first isocyanate component UV 235nm
; the second isocyanate component and the standard solution for the second isocyanate component UV 225 nm

### 1. Polyisocyanate Component

### (Preparation Example 1) First Isocyanate Component (MDI Prepolymer)

289 parts by mass of ACTCOL DL4000 (that is a trade name of a polyether polyol having a number average molecular weight of 4000 and an average number of hydroxyl groups of 2, and manufactured by Mitsui Chemicals, Inc.) and 578 parts by mass of ACTCOL T-5000 (that is a trade name of a polyether polyol having a number average molecular weight of 5000 and an average number of hydroxyl groups of 3, and manufactured by Mitsui Chemicals, Inc.) as the first material polyol, and 133 parts by mass of 4,4'-diphenylmethane diisocyanate (MDI) as the first material polyisocyanate were mixed. The equivalent ratio (NCO/OH) was 2.16 at the mixing. Next, the obtained mixture was stirred in a stream of nitrogen gas at 60°C for 1 hour and further at 70°C for 4 hours to cause a urethane-forming reaction. In this manner, a first isocyanate component containing a first isocyanate group-terminated urethane prepolymer (MDI prepolymer) was produced. The concentration of the solid content of the MDI prepolymer was 100%, and the content ratio of the isocyanate group was 2.3% by mass.

### (Preparation Example 2) Third Isocyanate Component (MDI Carbodiimide)

As the third isocyanate component, CORONATE MX (a carbodiimide-modified product of diphenylmethane diisocyanate, with an NCO content of 29.0% by mass, manufactured by Tosoh Corporation) was prepared. Hereinafter, the solid content in CORONATE MX is referred to as MDI carbodiimide.

### (Preparation Example 3) Second Isocyanate Component (XDI/D-400)

264.0 parts by mass of ACTCOL D-400 (that is a trade name of a polyether polyol having a number average molecular weight of 400 and an average number of hydroxyl groups of 2, manufactured by Mitsui Chemicals, Inc.) as the second material polyol and 736.0 parts by mass of 1,3-xylylene diisocyanate (XDI) as the second material polyisocyanate were mixed. The equivalent ratio (NCO/OH) was 6 at the mixing. Next, the obtained mixture was stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, a cooling water temperature of 10°C). In this manner, a second isocyanate component (XDI/D-400) containing a second isocyanate group-terminated urethane prepolymer was produced.

The concentration of the solid content of the second isocyanate component (XDI/D-400) was 100%, the content ratio of the isocyanate group was 10.5% by mass, and the viscosity at 25°C of 9300 mPa·s.

Further, with respect to the total amount of the second isocyanate component, the content ratio of the second material polyisocyanate (XDI monomer) was 0.20% by mass.

The viscosity was measured at 30°C using a B-type viscosimeter (model number TVB-10M, Rotor No. 4, the number of revolutions of 2 rpm) in accordance with JIS K 7117-1 (1999) (the same applies hereinafter).

### (Preparation Example 4) Second Isocyanate Component (HDI/D-400)

Hexamethylene diisocyanate (HDI) was used as the second material polyisocyanate. Further, ACTCOL D-400 (that is a trade name of a polyether polyol having a number average molecular weight of 400 and an average number of hydroxyl groups of 2, and manufactured by Mitsui Chemicals, Inc.) was used as the second material polyol. The equivalent ratio (NCO/OH) was set to 6. These were stirred in a stream of nitrogen gas at 110°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (HDI/D-400) containing a second isocyanate group-terminated urethane prepolymer was produced.

The concentration of the solid content of the second isocyanate component (HDI/D-400) was 100%, the content ratio of the isocyanate group was 10.2% by mass, and the viscosity at 25°C was 1400 mPa·s.

Further, with respect to the total amount of the second isocyanate component, the content ratio of the second material polyisocyanate (HDI monomer) was 0.23% by mass.

### (Preparation Example 5) Second Isocyanate Component (PDI/D-400)

Pentamethylene diisocyanate (PDI) was used as the second material polyisocyanate. Further, ACTCOL D-400 (that is a trade name of a polyether polyol having a number average molecular weight of 400 and an average number of hydroxyl groups of 2, and manufactured by Mitsui Chemicals, Inc.) was used as a second material polyol. The equivalent ratio (NCO/OH) was set to 6. These were stirred in a stream of nitrogen gas at 110°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (PDI/D-400) containing a second isocyanate group-terminated urethane prepolymer was produced.

The concentration of the solid content of the second isocyanate component (PDI/D-400) was 100%, the content ratio of the isocyanate group was 10.9% by mass, and the viscosity at 25°C was 1700 mPa·s.

Further, with respect to the total amount of the second isocyanate component, the content ratio of the second material polyisocyanate (PDI monomer) was 0.20% by mass.

### (Preparation Example 6) Second Isocyanate Component (HeXDI/D-400)

1,3-bis (isocyanatomethyl) cyclohexane (H₆XDI) was used as the second material polyisocyanate. Further, ACTCOL D-400 (that is a trade name of a polyether polyol having a number average molecular weight of 400 and an average number of hydroxyl groups of 2, and manufactured by Mitsui Chemicals, Inc.) was used as the second material polyol. The equivalent ratio (NCO/OH) was set to 6. These were stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (HeXDI/D-400) containing a second isocyanate group-terminated urethane prepolymer was produced.

The concentration of the solid content of the second isocyanate component (H₆XDI/D-400) was 100%, the content ratio of the isocyanate group was 11.4% by mass, and the viscosity of 25°C was 14000 mPa·s. Further, with respect to the total amount of the second isocyanate component, the content ratio of the second material polyisocyanate (H₆XDI monomer) was 0.80% by mass.

### (Preparation Example 7) Second Isocyanate Component (XDI/T-700)

1,3-xylylene diisocyanate (XDI) was used as the second material polyisocyanate. Further, ACTCOL T-700 (that is a trade name of a polyether polyol having a number average molecular weight of 700 and an average number of hydroxyl groups of 3, and manufactured by Mitsui Chemicals, Inc.) was used as a second material polyol. The equivalent ratio (NCO/OH) was set to 10. These were stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (XDI/T-700) containing a second isocyanate group-terminated urethane prepolymer was produced.

The concentration of the solid content of the second isocyanate component (XDI/T-700) was 100%, the content ratio of the isocyanate group was 10.1% by mass, and the viscosity at 30°C was 17000 mPa·s. Further, with respect to the total amount of the second isocyanate component, the content ratio of the second material polyisocyanate (XDI monomer) was 0.10% by mass.

### (Preparation Example 8) Second Isocyanate Component (XDI/DL-4000)

1,3-xylylene diisocyanate (XDI) was used as the second material polyisocyanate. Further, ACTCOL DL-4000 (that is a trade name of a polyether polyol having a number average molecular weight of 4000 and an average number of hydroxyl groups of 2, and manufactured by Mitsui Chemicals, Inc.) was used as the second material polyol. The equivalent ratio (NCO/OH) was set to 10. These were stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (XDI/DL-4000) containing a second isocyanate group-terminated urethane prepolymer was produced.

The concentration of the solid content of the second isocyanate component (XDI/ DL-4000) was 100%, the content ratio of the isocyanate group was 2.02% by mass, and the viscosity of 30°C was 2800 mPa s. Further, with respect to the total amount of the second isocyanate component, the content ratio of the second material polyisocyanate (XDI monomer) was 0.18% by mass.

### (Preparation Example 9) Second Isocyanate Component (XDI/T-300)

1,3-xylylene diisocyanate (XDI) was used as the second material polyisocyanate. Further, ACTCOL T-300 (that is a trade name of a polyether polyol having a number average molecular weight of 300 and an average number of hydroxyl groups of 3, and manufactured by Mitsui Chemicals, Inc.) was used as the second material polyol. The equivalent ratio (NCO/OH) was set to 10. These were stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (XDI/T-300) containing a second isocyanate group-terminated urethane prepolymer was produced.

The concentration of the solid content of the second isocyanate component (XDI/T-300) was 100%, the content ratio of the isocyanate group was 13.7% by mass, and the viscosity at 30°C was 84000 mPa·s. Further, with respect to the total amount of the second isocyanate component, the content ratio of the second material polyisocyanate (XDI monomer) was 0.12% by mass.

### (Preparation Example 10) Second Isocyanate Component (XDI/T-5000)

1,3-xylylene diisocyanate (XDI) was used as the second material polyisocyanate. Further, ACTCOL T-5000 (that is a trade name of a polyether polyol having a number average molecular weight of 5000 and an average number of hydroxyl groups of 3, and manufactured by Mitsui Chemicals, Inc.) was used as the second material polyol. The equivalent ratio (NCO/OH) was set to 10. These were stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (XDI/T-5000) containing a second isocyanate group-terminated urethane prepolymer was produced.

The concentration of the solid content of the second isocyanate component (XDI/T-5000) was 100%, the content ratio of the isocyanate group was 2.75% by mass, and the viscosity at 30°C was 5300 mPa s. Further, with respect to the total amount of the second isocyanate component, the content ratio of the second material polyisocyanate (XDI monomer) was 0.11% by mass.

### (Preparation Example 11) Second Isocyanate Component (XDI/TEG)

1,3-xylylene diisocyanate (XDI) was used as the second material polyisocyanate. Further, triethylene glycol (TEG, a molecular weight of 150.17) was used as the second material polyol. The equivalent ratio (NCO/OH) was set to 10. These were stirred in a stream of nitrogen gas at 70°C for 6 to 24 hours to cause a urethane-forming reaction.

Thereafter, the obtained reaction product was distilled by a thin-film distillation (at a wall surface temperature of 145 to 155°C, a vacuum degree of 100 Pa or less, a flow rate of 3 to 5 g/min, and a cooling water temperature of 10°C). Except for the foregoing, in the same manner as Preparation Example 3, a second isocyanate component (XDI/TEG) containing a second isocyanate group-terminated urethane prepolymer was produced.

The concentration of the solid content of the second isocyanate component (XDI/TEG) was 100%, and the content ratio of the isocyanate group was 16.4% by mass. Further, with respect to the total amount of the second isocyanate component, the content ratio of the second material polyisocyanate (XDI monomer) was 0.28% by mass. The second isocyanate component (XDI/TEG) was gelatinized three days later. Thus, the viscosity of the second isocyanate component (XDI/TEG) was not measured.

### Examples 1 to 13 and Comparative Examples 1 to 7

In accordance with each formulation in Tables 1 to 3, the first isocyanate component, the second isocyanate component, and the third isocyanate component were mixed. In this manner, a polyisocyanate component (main agent) was produced. In Comparative Examples 1 and 2, the second isocyanate component was not mixed.

Further, in Comparative Example 6, the second isocyanate component (XDI/TEG) was gelatinized, and thus a polyisocyanate component (main agent) was not able to be produced.

Further, in Comparative Example 7, Crude MDI (of which trade name was COSMONATE M-200, and that was a polymethylene polyphenyl polyisocyanate with an NCO content ratio of 31.3% by mass, manufactured by Mitsui Chemicals, Inc.) was added as the second isocyanate component.

Further, in accordance with each formulation in Tables 1 to 3, ACTCOL EP-330N (manufactured by Mitsui Chemicals, Inc.) and 1,4-butanediol were mixed, and 1500 ppm of a catalyst (DABCO 33-LV) was added to the mixture. In this manner, a polyol component (curing agent) was produced. The ACTCOL EP-330N was a block copolymer of propylene oxide-ethyleneoxide (ethyleneoxide content (terminated oxyethylene group content): 15% by mass, a number average molecular weight: 5000, an average functionality: 3, a hydroxyl value: 34 mgKOH/g).

In this manner, a structural polyurethane adhesive including a polyisocyanate component and a polyol component was produced.

### (Evaluations)

### 1. Adhesive Test (Examples 1 to 9 and Comparative Examples 1 and 3 to 7: PP/SPCC)

A test piece was prepared by cutting a polypropylene plate (J707G, manufactured by Prime Polymer Co., Ltd. (PP)) into a width of 25mm. The test piece was subjected to corona treatment and adjusted to have a wettability of 40 dyn/cm or more (JIS K 6768 (1999)) immediately before the production of an adhesive test piece. The test piece was prepared as an adherend 1.

Meanwhile, an ED-SPCC plate (JIS G 3141 (SPCC, SD), manufactured by Test Piece Co.) was prepared by cutting a Steel Plate Cold Commercial (SPCC) into a width of 25 mm and subjecting the cut SPCC to cation electrodeposition (ED). Next, the surface of the SPCC was degreased and washed with isopropyl alcohol and thereafter dried. The ED-SPCC plate was prepared as an adherend 2.

A polyisocyanate component and a polyol component were mixed in a ratio in which the equivalent ratio (NCO/OH) was 1.05. Next, glass beads (ASGB-60, manufactured by AS ONE Corporation., 0.250 to 0.355 mm) were added to the obtained mixture to adjust the layer thickness. The adding amount of the glass beads was adjusted to 1% by mass with respect to the total amount of the polyisocyanate component, the polyol component, and the glass beads.

Thereafter, the above-described mixture was applied to the adherend 1. The adherend 1 and adherend 2 were brought into tight contact with each other so as to have an adhesive area of 25 mm × 12.5 mm and an adhesive layer thickness of 0.3 mm, and cured at 50°C for 20 minutes, and aged at room temperature (18 to 28°C and 45 to 55%RH) for a week. In this manner, an adherend test piece (hereinafter, referred to as a test plate) was produced.

The shear bond strength (hereinafter, referred to as adhesive strength) [MPa] between the adherend 1 and the adherend 2 was measured at a tensile rate of 50 mm/min using a tensile test machine (U-4410, manufactured by Orientec, Co., Ltd.).

Further, failures of the adhesives were visually observed and evaluated by the following criteria.
Good: Cohesive failure or a failure of the surface of the polypropylene (PP)
Bad: Interfacial peeling

### 2. Adhesive Test (Examples 10 to 13 and Comparative Example 2: CFRP/SPCC)

A 2.0 × 25 × 100 mm CFRP (matte) manufactured by Standard Test Piece was prepared. Next, the surface of the CFRP was degreased and washed with isopropyl alcohol and thereafter dried. The CFRP was prepared as an adherend 1. Except for the foregoing, in the same manner as the above-described Adhesive Test (PP/SPCC), the adhesive strength [MPa] was measured.

Further, failures of the adhesives were visually observed and evaluated by the following criteria.
Excellent: the area ratio of cohesive failure was 80% or more and 100% or less.
Good: the area ratio of cohesive failure was 50% or more and less than 80%.
Bad: the area ratio of cohesive failure was less than 50%.

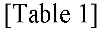

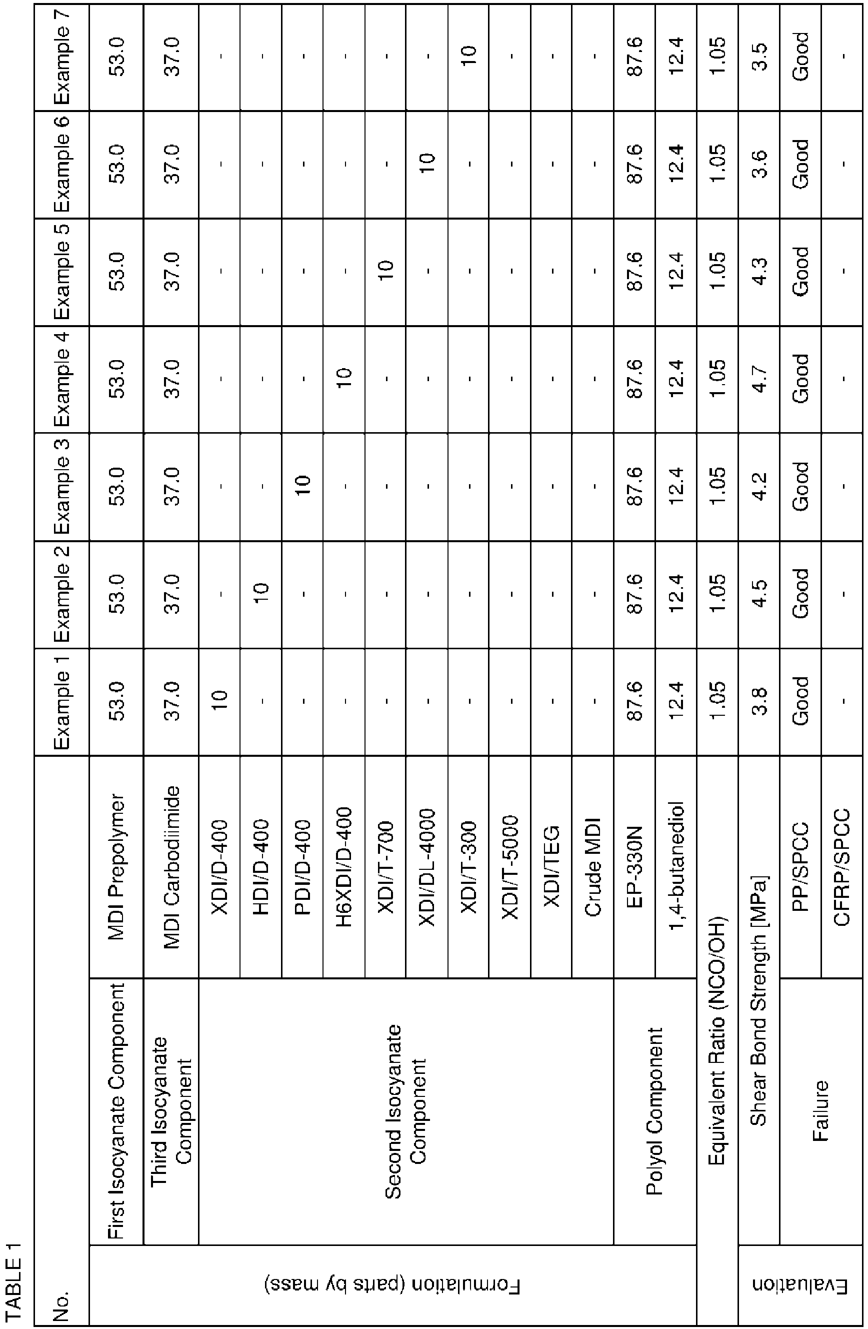

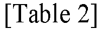

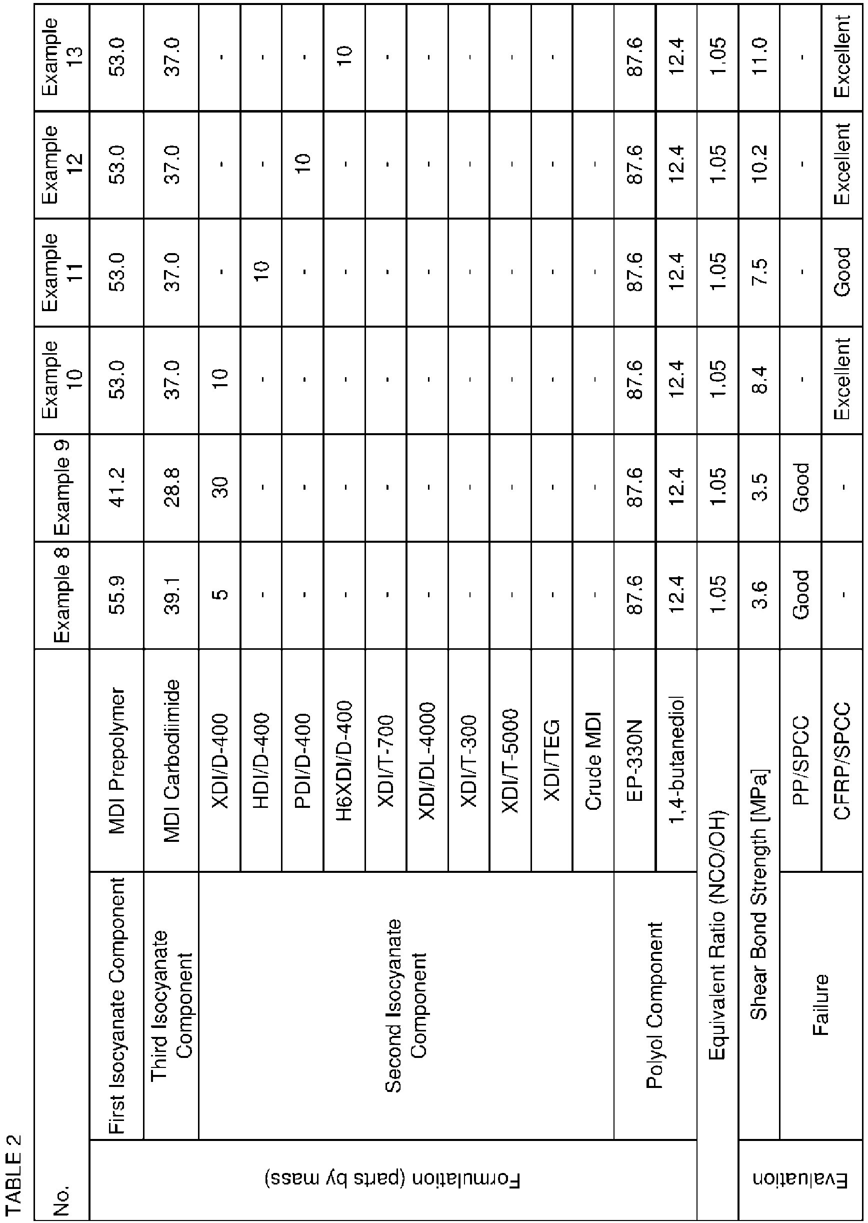

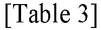

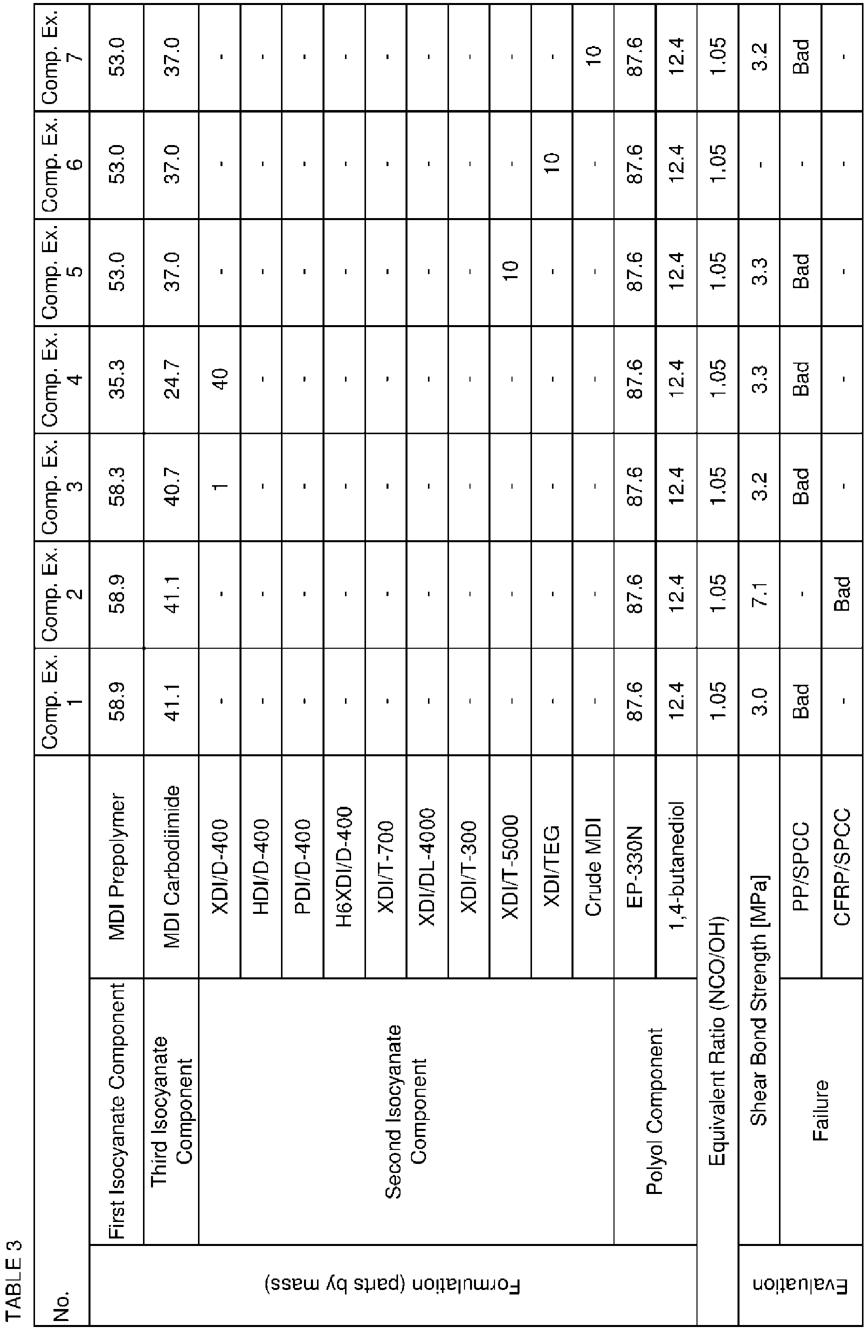

While the illustrative embodiments of the present invention are provided in the above description, such is for illustrative purpose only and it is not to be construed as limiting in any manner. Modification and variation of the present invention that will be obvious to those skilled in the art is to be covered by the following claims.

### Industrial Applicability

The structural polyurethane adhesive of the present invention is suitably used for bonding a plurality of members in a structure formed from the members.

## Claims

1. A structural polyurethane adhesive comprising:
a polyisocyanate component; and a polyol component,
wherein the polyisocyanate component contains:
a first isocyanate component containing a first isocyanate group-terminated urethane prepolymer that is a reaction product of a first material polyisocyanate consisting of an aromatic polyisocyanate and a first material polyol containing a macropolyol;
a second isocyanate component containing a second isocyanate group-terminated urethane prepolymer that is a reaction product of a second material polyisocyanate consisting of an araliphatic polyisocyanate and/or an aliphatic polyisocyanate and a second material polyol containing a polyether polyol having a number average molecular weight of 160 or more and 4900 or less; and
a third isocyanate component containing a carbodiimide-modified product of an aromatic polyisocyanate, and
wherein a ratio of the second isocyanate component with respect to a total amount of the first isocyanate component, the second isocyanate component, and the third isocyanate component is 2% by mass or more and 35% by mass or less.

2. The structural polyurethane adhesive according to claim 1, wherein the second material polyisocyanate contains at least one selected from the group consisting of xylylene diisocyanate, hexamethylene diisocyanate, pentamethylene diisocyanate, isophorone diisocyanate, methylene bis (cyclohexyl isocyanate), and bis (isocyanatomethyl) cyclohexane.

3. The structural polyurethane adhesive according to claim 1, wherein a content ratio of the second material polyisocyanate with respect to a total amount of the second isocyanate component is 1.0% by mass or less.

4. The structural polyurethane adhesive according to claim 1, wherein the second material polyol contains a polyether polyol having an average number of hydroxyl groups of 2 or more and 3 or less.

5. The structural polyurethane adhesive according to claim 1, being a two-component curable adhesive including a main agent containing the polyisocyanate component and a curing agent containing the polyol component.

6. The structural polyurethane adhesive according to claim 1, being a solventless-type adhesive.
